Europäisches Patentamt

European Patent Office

Office européen des brevets

Veröffentlichungsnummer: **0 283 544**

**A1**

# EUROPÄISCHE PATENTANMELDUNG

Anmeldenummer: 87104566.2

Int. Cl.⁴ **C04B 35/52** , B28B 3/02

Anmeldetag: **27.03.87**

Veröffentlichungstag der Anmeldung:
**28.09.88 Patentblatt 88/39**

Benannte Vertragsstaaten:
**DE FR GB IT**

Anmelder: **Ringsdorff-Werke GmbH**
**Drachenburgstrasse 1 Bad Godesberg**
**D-5300 Bonn 2(DE)**

Erfinder: **Linsa, Erich**
**Im Rossberg 123**
**D-5481 Altenahr(DE)**

Drucksinterform aus Graphit.

Zum Sintern von Hartmetallwerkzeugen verwendet man Drucksinterformen aus Graphit, die nur beschränkt beständig sind oder Formen aus kohlenstoffaserverstärktem Kohlenstoff, die aufwendig sind. Die neue Form hat bei kleinem Aufwand eine hohe Gebrauchsfähigkeit.

Die Form besteht aus einem hohlzylindrischen Graphitbehälter (1), der außen mit einer kohlenstofffaserhaltigen mit dem Behälter stoffschlüssig verbundenen Verstärkungsschicht (2) und innen mit austauschbaren Verschleißplatten (4) versehen ist.

**Fig. 1**

EP 0 283 544 A1

## Drucksinterform aus Graphit

Gegenstand der Erfindung ist eine Drucksinterform aus Graphit und kohlenstoffaserverstärktem Kohlenstoff.

Hartmetall-, Diamant-und Keramikwerkzeuge werden fast ausschließlich durch Drucksintern bei Drücken bis etwa 500 bar und Temperaturen bis etwa 1800 °C hergestellt. Die körnigen oder pulverförmigen Hartstoffe werden dabei in besonderen Drucksinter-oder Heißpreßformen, die durch direkte Widerstandsheizung oder induktiv erhitzt werden, auf eine metallische oder keramische Matrix aufgesintert. Die aus mehreren Teilen, einschließlich Stempel, zusammengesetzten Drucksinterformen bestehen überwiegend aus Graphit, einem temperaturbeständigen, den elektrischen Strom leitenden Werkstoff, dessen Festigkeit bei etwa 2500 °C ein Maximum durchläuft. Absolut beträgt die Zugfestigkeit des Graphits nicht mehr als etwa 10 bis 20 MPa und auch die vergleichsweise große Sprödigkeit genügt nicht immer den Anforderungen. Es ist bereits vorgeschlagen worden, ganz oder zu wenigstens einem Teil aus kohlenstoffaserverstärktem Kohlenstoff (CFC) bestehende Drucksinterformen zu verwenden, die diese Mängel in einem geringeren Grad haben (J. Hansen, Dokumentation zum Forschungs-und Entwicklungsprogramm des Bundesministeriums für Forschung und Technologie (BMFT) - Faserverbundwerkstoffe Bd. 3, Springer-Verlag Berlin 1986, S. 569).

Kohlenstoffaserverstärkter Kohlenstoff besteht aus einer kohlenstoff-oder graphitischen Matrix, in die verstärkende Kohlenstofffasern eingelagert sind. Die Faserverstärkung bewirkt bezogen auf normalem Graphit eine Erhöhung von Festigkeit und Bruchzähigkeit, Voraussetzungen für leistungsfähigere Drucksinterformen (D.L. Schmidt, Sampe J. May/June 1972, 19). Die hohe Festigkeit erlaubt u.a. die Verwendung von Drucksinterformen mit kleinen Wandstärken. Diese Formen haben eine kleine Wärmekapazität und können sehr - schnell aufgeheizt und abgekühlt werden. Zur Herstellung von Körpern aus kohlenstoffaserverstärktem Kohlenstoff werden aus Kohlenstoffgewebe oder unidirektionalen Gelegen gebildete Stapel oder Wickelkörper aus Kohlenstoffgarn oder Bändern mit einem härtbaren Kunstharz imprägniert und die imprägnierten Körper zur Härtung und Pyrolyse des Harzes auf etwa 1000 °C erhitzt. Ein Großteil der Masse geht dabei als flüchtige Pyrolyseprodukte verloren, so daß der Prozeß mehrfach wiederholt werden muß, bevor eine geschlossene, mechanische Spannungen übertragende Matrix vorliegt. Bei einem anderen Verfahren werden die Stapel oder Wickelkörper mit Pyrokohlenstoff imprägniert. Wegen der kleinen Abscheidungsgeschwindigkeit des Pyrokohlenstoffs ist der Zeitaufwand für die Herstellung von CFC-Körpern mit Pyrokohlenstoff-Matrix groß. Vollständig aus kohlenstoffaserverstärktem Kohlenstoff bestehende Drucksinterformen sind entsprechend sehr aufwendig. Es ist deshalb vorgeschlagen worden, Drucksinterformen nur zu einem Teil aus kohlenstoffaserverstärktem Kohlenstoff und zu einem anderen Teil aus Graphit auszuführen. Bekanntgeworden ist eine hohlzylindrische Drucksinterform aus halbmondförmigen Graphitsegmenten, die von einem Ring aus kohlenstoffaserverstärtem Kohlenstoff umschlossen sind (l.c., S. 600). Der freitragende Ring nimmt beim Betrieb des Sinterapparats die thermische Dehnung des Graphitmaterials auf. Die dabei auftretenden hohen Zugspannungen erfordern ein größeres Widerstandsmoment, das nur mit Ringen größerer Wandstärke erreicht wird. Einer Verminderung des Anteils an kohlenstoffaserverstärktem Kohlenstoff in den Formen sind entsprechend Grenzen gesetzt.

Der Erfindung liegt die Aufgabe zugrunde, in faserverstärkten Drucksinterformen den Anteil an kohlenstoffaserverstärktem Kohlenstoff zu verkleinern, ohne damit ihre Gebrauchsfähigkeit, vor allem die Lebensdauer, zu beeinträchtigen.

Die Aufgabe wird mit einer Drucksinterform gelöst, die aus einem hohlzylindrischen oder prismatischen Graphitbehälter besteht, der außen mit einer stoffschlüssig mit dem Behälter verbundenen kohlenstoffaserhaltigen Verstärkungsschicht und innen mit austauschbaren Verschleißplatten versehen ist.

Die erfindungsgemäße Drucksinterform enthält den aus kohlenstoffaserverstärktem Kohlenstoff bestehenden Verstärkungsteil nicht als selbständiges Element, sondern in stofflicher Verbindung mit dem Graphitbehälter. Die Faserschicht ist sehr dünn und enthält nur wenige Faserlagen, so daß die Elastizität des Verbundwerkstoffs in vollem Umfang genutzt wird. Der Elastizitätsmodul kohlenstoffaserverstärkter gekrümmter Kohlenstoffkörper nimmt in tangentialer Richtung allgemein mit der Zahl der Faserlage ab. Nach der Theorie der laminierten Platten errechnet sich beispielsweise für eine handelsübliche CFC-Type (CC 1501 G, SIGRI GmbH) der Modul für fünf, fünfzehn-und fünfundzwanziglagige Schichten zu 52, 47 und 45 GPa. Die hoh Steifigkeit dünnerer Verstärkungsschichten ermöglicht eine wesentliche Verringerung der für die Verstärkung der Drucksinterform nötigen Menge Kohlenstofffasern.

In der Verstärkungsschicht verlaufen die Kohlenstofffasern bevorzugt parallel zur äußeren Oberfläche des Graphitbehälters. Die Faserorientierung erreicht man in bekannter Weise durch Auflegen von Geweben aus Kohlenstoffasern auf die äußere Oberfläche, durch das Wickeln von Garnen oder Bändern auf den Graphitbehälter oder durch Spritzen. Pinseln oder Walzen von Kurzschnittfasern enthaltenden Massen auf die Oberfläche. Garne. Bänder und Gewebe sind zweckmäßig mit einem härtbaren Kunstharz, wie Phenolformaldehyd-oder Epoxidharze beschichtet (Prepreg). Die mit der Faserorientierung erreichbare große tangentiale Festigkeit wird in einer bevorzugten Ausführung durch Vorspannung der Fasern in der Verstärkungsschicht noch erhöht. Zur Herstellung derartiger Verstärkungsschichten werden Garne unter Zugspannungen auf der Oberfläche des Graphitbehälters aufgezogen. Der Behälter steht unabhängig von der jeweiligen Verwendungstemperatur der Drucksinterform unter Druckspannungen, die die Zugspannungen in der Behälterwand vermindern. Von Vorteil sind auch Verstärkungsschichten, die Kohlenstofffasern in Form eines Gewebes enthalten. Die Orientierung der in Ebenen parallel zur Oberfläche des Kerns angeordneten Fasern kann durch Wahl des Gewebemusters den Belastungsbedingungen der Drucksinterform angepaßt werden. In bekannter Weise kann die Orientierung der Fasern in aufeinanderfolgenden Lagen auch verschieden sein, etwa um die Scherfestigkeit innerhalb der Verstärkungsschicht zu erhöhen. Zur Verbesserung der Oxidationsbeständigkeit der Verstärkungsschicht und dadurch auch der gesamten Drucksinterform sollte die Schicht zweckmäßig ein oder mehrere Stoffe enthalten, die die Oxidation des Kohlenstoffs inhibieren, wie Phosphate oder Borverbindungen.

Die dem Verschleiß ausgesetzten Innenflächen des Graphitbehälters sind mit Verschleißplatten aus dem gleichen Graphit versehen, oder bevorzugt mit einer Graphitsorte, die bei etwa gleichem thermischen Ausdehnungskoeffizienten eine größere Verschleißfestigkeit und Härte als der Graphitbehälter haben. Die harte Kohlenstoffsorten wie Anthrazit, Steinkohlenteerpechkoks oder Rußkoks enthaltenden Verschleißplatten und der Graphitbehälter sind lösbar, z.B. durch eine Feder-Nut-Verbindung miteinander verbunden, so daß die Verschleißplatten leicht ausgetauscht werden können. Gegebenenfalls sind zwischen Behälter und Verschleißplatten Futterstücke eingesetzt, etwa um Größe und Form des Sinterkörpers zu ändern.

Zum Herstellen der Drucksinterformen wird ein hohlzylindrischer oder prismatischer Graphitbehälter mit Kohlenstoffasergarn - bevorzugt mit einer Vorspannung - umwickelt oder es werden Gewebe aus Kohlenstofffasern auf die äußere Oberfläche des Behälters aufgelegt. Garne und Gewebe sind zweckmäßig mit einem Binder beschichtet, oder der Binder wird durch Eintauchen der Anordnung in den Binder in die Wickel-bzw. Gewebeschichten eingebracht. Als Binder geeignet sind alle carbonisierbaren. bei der Imprägnierungstemperatur flüssigen Substanzen. die einen möglichst großen Koksrückstand haben. z.B Pech oder Duroplaste. Besonders zweckmäßig sind Phenolformaldehyd-oder Furanharze. Den Harzen werden zweckmäßig Inhibierungsmittel enthaltende Substanzen zugesetzt. z.B. Triethylphosphat oder Tricresylphosphat (US-PS 2 989 408). Graphitbehälter und imprägnierte Verstärkungsschicht werden, bei Verwendung von Duroplasten nach der Härtung der Harze, gegebenenfalls unter Druck in inerter Atmosphäre auf wenigstens 1000 °C. zweckmäßig auf die Anwendungstemperatur der Drucksinterform, erhitzt und dabei eine im wesentlichen aus Kohlenstoff bestehende Matrix gebildet. Die Matrix ist nicht porenfrei. sie verbindet aber in der Regel Kohlenstofffasern und Graphitbehälter derart miteinander, daß eine Verminderung des Porenanteils etwa durch Imprägnieren der Verstärkungsschicht mit carbonisierbaren Stoffen und Carbonisieren des Imprägniermittels nicht nötig ist.

Die Erfindung wird im folgenden anhand von Zeichnungen und eines Beispiels erläutert. Es zeigen:

　　Fig. 1 - eine perspektivische Darstellung der Drucksinterform,

　　Fig. 2 - einen axialen Schnitt parallel III-III in Fig. 1 und

　　Fig. 3 - einen Schnitt parallel II-II in Fig. 1.

Auf einen hohlzylindrischen Behälter aus einer feinkörnigen Graphitsorte - Rohdichte 1,82 g/cm3, Biegefestigkeit 40 MPa - mit einer Wandstärke von 20 mm wurde zur Herstellung einer Verstärkungsschicht ein Kohlenstoffasergarn - Zugfestigkeit 3 GPa, 150.000 Filamente - Filamentdurchmesser 8 μm - unter Zugspannung auf die äußere Zylinderfläche gewickelt. Das Garn war zuvor durch ein Bad aus Phenolformaldehydharz gezogen worden, das als Inhibierungsmittel 3 % Tricresylphosphat enthielt. Jede Wickellage mit ungerader Nummer war um + 30° gegen die Längsachse des Hohlzylinders geneigt, jede Lage mit gerader Nummer um - 30°; die Dicke der Verstärkungsschicht betrug etwa 2 mm. Nach Abstreifen von überschüssigem Harz mit Hilfe einer Walze wurde der umwickelte Hohlzylinder erhitzt und zur Pyrolyse des Harzes und zur Bildung einer stoffschlüssigen, aus Kohlenstoff bestehenden Verbindung zwischen den einzelnen Fasern und dem Graphitbehälter auf 1100 °C erhitzt. Der Berstdruck umwickelter Behälter war 500 bis 900 bar gegen 50 bis 100 bar von Behältern ohne Verstärkungsschicht.

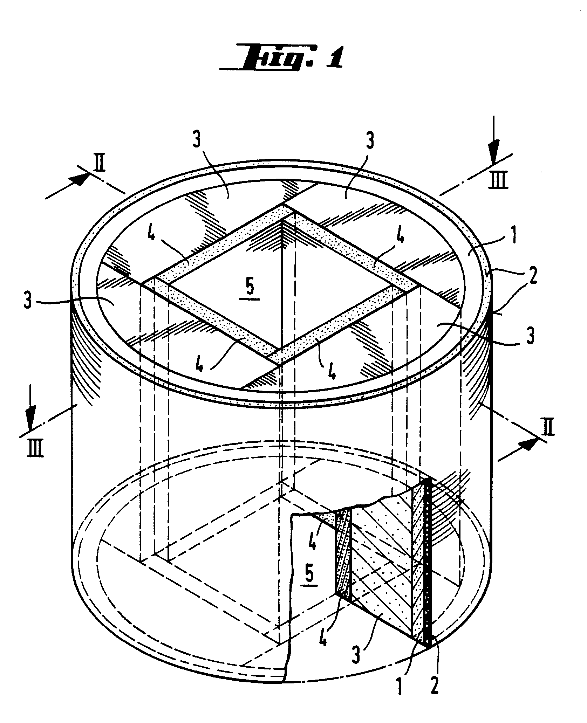

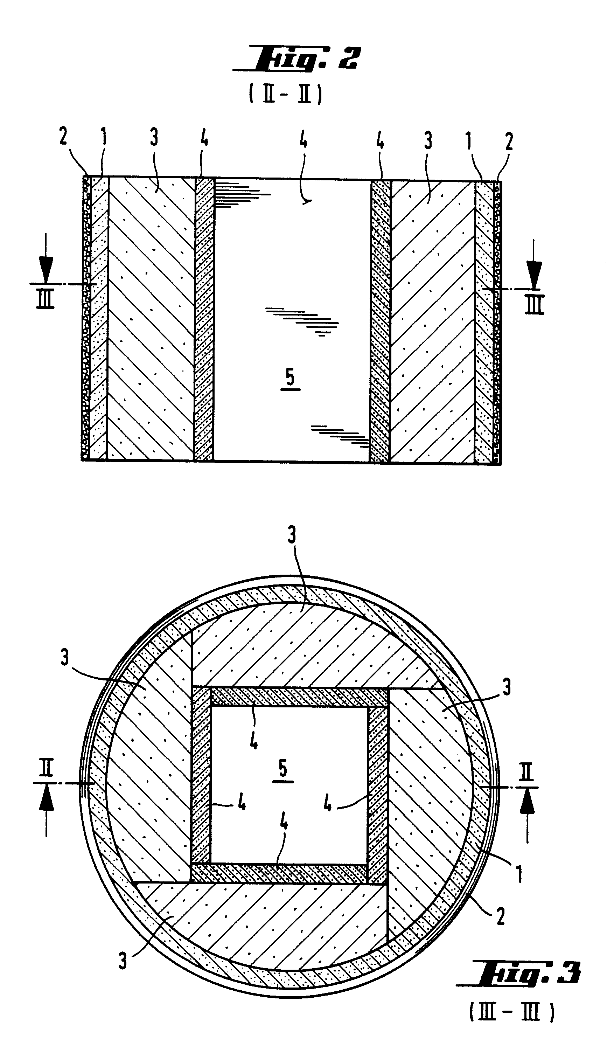

Die zeichnerisch dargestellte Drucksinterform (Fig. 1 bis 3) hat einen Außendurchmesser von etwa 290 mm und eine Höhe von 280 mm. Der hohlzylindrische Graphitbehälter 1. dessen Wandstärke 24 mm beträgt, ist stoffschlüssig mit der 4 mm-dicken Verstärkungsschicht 2 verbunden. Zum Drucksintern eines Werkzeugs mit quadratischer Grundfläche, Kantenlänge 80 mm, sind in den Graphitbehälter segmentartige Futterstücke 3 aus einer normalen Graphitsorte mit einer Biegefestigkeit von 30 MPa und austauschbaren Verschleißplatten 4 eingelegt, die aus einer verschleißfesteren Graphitsorte bestehen. Zeichnerisch nicht dargestellt sind die Druckstempel, die in die quadratische Öffnung 5 der Drucksinterform eingeführt werden und die Vorrichtung zur induktiven Erhitzung der Drucksinterform auf die Sintertemperatur. Die Form wird bei Temperaturen zwischen 800 und 2000 °C mit Drücken von 200 bis 600 bar beaufschlagt.

phitbehälter mit kunstharzimprägnierten Kohlenstoffbändern unter einer Zugspannung umwickelt wird und durch Erhitzen auf die Verwendungstemperatur der Form stoffschlüssige Verbindungen zwischen Graphitbehälter und Kohlenstoffasern erzeugt werden.

## Ansprüche

1. Drucksinterform aus Graphit und kolenstoffaserverstärktem Kohlenstoff,
dadurch gekennzeichnet,
daß die Form aus einem hohlzylindrischen oder prismatischen Graphitbehälter besteht, der außen mit einer stoffschlüssig mit dem Behälter verbundenen kohlenstoffaserhaltigen Verstärkungsschicht und innen mit austauschbaren Verschleißplatten versehen ist.

2. Drucksinterform nach Patentanspruch 1,
dadurch gekennzeichnet,
daß die Verstärkungsschicht sich parallel zur Oberfläche des Graphitbehälters erstreckende Kohlenstoffasern enthält.

3. Drucksinterform nach den Patentansprüchen 1 und 2,
dadurch gekennzeichnet,
daß die Verstärkungsschicht mit einer Vorspannung versehen ist.

4. Drucksinterform nach den Patentansprüchen 1 bis 3,
dadurch gekennzeichnet,
daß die Verstärkungsschicht Kohlenstoffasern in Form eines Gewebes enthält.

5. Durcksinterform nach den Patentansprüchen 1 bis 4,
dadurch gekennzeichnet,
daß die Verstärkungsschicht ein Inhibierungsmittel enthält.

6. Drucksinterform nach den Patentansprüchen 1 bis 5,
dadurch gekennzeichnet,
daß die Verschleißplatte eine größere Härte als der Graphitbehälter hat.

7. Verfahren zur Herstellung einer Drucksinterform nach den Patentansprüchen 1 bis 6,
dadurch gekennzeichnet,
daß ein hohlzylindrischer oder prismatischer Gra-

# Fig. 1

**Fig: 2**

( II – II )

**Fig: 3**

( III – III )

Europäisches
Patentamt

**EUROPÄISCHER RECHERCHENBERICHT**

Nummer der Anmeldung

EP 87 10 4566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 917 884 (FIBER MATERIALS INC.) * Insgesamt * --- | 1-4,6,7 | C 04 B 35/52 B 28 B 3/02 |
| Y | DE-A-2 112 204 (OTTO SCHARFENSTEIN METALLVERARBEITUNG) * Insgesamt * --- | 1-4,6,7 | |
| Y | US-A-3 550 213 (P.A. ORMSBY) * Insgesamt * --- | 1-4,6,7 | |
| Y | FR-A-1 402 131 (INSTYTUT METALURGII ZELAZA) * Insgesamt * --- | 1-4,6,7 | |
| A | GB-A-2 163 736 (FIBER MATERIALS INC.) * Insgesamt * --- | 1-4,7 | |
| A | GB-A-1 314 677 (UNITED STATES BORAX & CHEMICAL CORP.) * Insgesamt * --- | 1-4,7 | |
| A | GB-A- 899 183 (ASSOCIATED ELECTRICAL INDUSTRIES LTD) * Insgesamt * --- | 1 | RECHERCHIERTE SACHGEBIETE (Int. Cl.4) B 28 B B 30 B C 04 B |
| A | DE-A-3 234 777 (SCHUNK & EBE GmbH) * Insgesamt * --- | 1 | |
| A | BE-A- 557 070 (S.G. KRAPF) * Insgesamt * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 30-11-1987 | GOURIER P.A. |